# NEUE EUROPÄISCHE PATENTSCHRIFT

(11) **EP 2 225 044 B2**
(45) Veröffentlichungstag und Bekanntmachung des Hinweises auf die Entscheidung über den Einspruch: **11.08.2021**
(45) Hinweis auf die Patenterteilung: 02.03.2016
(21) Anmeldenummer: 08860422.8
(22) Anmeldetag: 12.12.2008
(51) Int. Cl.: B05B 15/12, F24F 3/00

(54) **KÜHLVORRICHTUNG UND VERFAHREN ZUM KÜHLEN VON GEGENSTÄNDEN AUS EINER BESCHICHTUNGSEINRICHTUNG**
COOLING APPARATUS AND METHOD FOR COOLING OBJECTS FROM A COATING DEVICE
DISPOSITIF DE REFROIDISSEMENT ET PROCÉDÉ DE REFROIDISSEMENT D'OBJETS SORTANT D'UN DISPOSITIF D'APPLICATION DE REVÊTEMENT

(30) Priorität: 13.12.2007 DE 102007062266
(43) Veröffentlichungstag der Anmeldung: 08.09.2010
(73) Patentinhaber: Dürr Systems AG, 74321 Bietigheim-Bissingen (DE)
(72) Erfinder: Wurster, Gerd, 70191 Stuttgart (DE)
(74) Vertreter: Witte, Weller & Partner Patentanwälte mbB
(86) Internationale Anmeldenummer: PCT/EP2008/010610
(87) Internationale Veröffentlichungsnummer: WO 2009/074344

(56) Entgegenhaltungen:
- EP-A- 1 080 788
- EP-A1- 1 681 102
- WO-A-92/09854
- DE-A1- 19 907 681
- DE-C1- 10 030 383
- FR-A- 2 575 940
- GB-A- 2 139 751
- JP-A- H0 531 417

## Beschreibung

Die vorliegende Erfindung betrifft eine Kühlvorrichtung, ein Kühlsystem und ein Verfahren zum Kühlen von Gegenständen aus einer Beschichtungseinrichtung. Die Erfindung betrifft ferner eine Beschichtungsanlage mit einem Trockner und einem Kühlsystem.

Eine der weit verbreiteten Techniken bei der Oberflächenbeschichtung ist das Lackieren. Beim Lackieren wird üblicherweise ein flüssiger oder pulverförmiger Beschichtungsstoff bzw. Lack dünn auf den zu lackierenden Gegenstand aufgetragen. Durch chemische und/oder physikalische Vorgänge bildet sich ein meist durchgehender Film auf der Oberfläche des Gegenstands. Der Film kann dann sowohl technische Wirkungen, wie z.B. einen Korrosionsschutz, als auch ästhetische Wirkungen entfalten, wie z.B. eine bestimmte Farbgebung.

Ein weit verbreitetes Verfahren zum Erzeugen von besonders hochwertigen und widerstandsfähigen Lackierungen ist das Einbrennlackieren. Dabei werden die zu lackierenden Gegenstände vor dem Lackiervorgang erhitzt. Der auf die Gegenstände aufgebrachte Lack kann schnell und gleichmäßig trocknen, wodurch sich eine qualitativ hochwertige Lackierung ergibt.

Im Sinne dieser Anmeldung soll unter dem Begriff "Beschichtungseinrichtung" eine Oberflächenbeschichtungseinrichtung verstanden werden, bei der die Beschichtung entweder durch einen Lackiervorgang oder durch einen Pulverbeschichtungsvorgang erfolgt. Dieser Begriff erstreckt nicht auf eine Beschichtungseinrichtung bei der ein Emailliervorgang oder Keramikeinbrennvorgang durchgeführt wird, was bei deutlich höheren Temperaturen erfolgt, die in der Regel erheblich höher als 250 °C liegen.

Beim Einbrennlackieren ist festzustellen, dass es sich um ein sehr energieintensives Verfahren handelt. Zum einen müssen die Gegenstände nach dem Lackieren in einem Trockner bzw. Ofen erhitzt werden. Dies erfordert eine erhebliche Energiezufuhr, da die Gegenstände möglichst schnell auf die typische Temperatur zwischen 125 °C und 250 °C, insbesondere zwischen 150 °C und 200 °C erhitzt werden müssen. Nach dem Einbrennvorgang müssen die Gegenstände wieder abgekühlt werden, um dann für weitere Bearbeitungsprozesse zur Verfügung zu stehen. Durch das Erhitzen und Abkühlen entsteht ein erheblicher Energieaufwand, obwohl der zu lackierende Gegenstand am Eingang und am Ausgang der Beschichtungsanlage (einschließlich der Kühlung) ungefähr die gleiche Temperatur hat.

In der Vergangenheit ist bspw. vorgeschlagen worden, für den Kühlvorgang Frischluft in eine Kühlvorrichtung einzubringen und die von den abzukühlenden Gegenständen erhitzte Luft in eine Lagerhalle einzuströmen, die geheizt werden soll. Die Abluft aus einer Kühlvorrichtung ist jedoch in der Regel nicht geruchsneutral und kann möglicherweise auch verbliebene Schadstoffanteile enthalten.

Aus der EP 1 080 788 A1 ist eine Kühlvorrichtung gemäß dem Oberbegriff von Anspruch 1 und ein Verfahren zum Kühlen von Gegenständen bekannt. Hierbei wird Luft in eine Kühlzone über Düsen von außen eingeblasen. Dabei erfolgt eine Beheizung der eingeblasenen Kühlluft, um Schäden an den lackierten Gegenständen durch Lösemittelkondensat zu vermeiden.

Aus der DE 199 07 681 A1 ist ferner ein Verfahren und eine Vorrichtung zum Behandeln einer Materialbahn bekannt, wobei die Materialbahn mit Strahlungsenergie behandelt und zur Kühlung Luft von unten abgesaugt, über einen Wärmetauscher gekühlt und von oben wieder zugeführt wird.

Aus der EP 1 681 102 A1 ist ferner ein Verfahren und eine Vorrichtung zum Trocknen von Lackschichten bekannt, wonach lackierte Teile im Trockner mit Strahlungsenergie behandelt werden und zusätzlich konditionierte Luft entgegen der Materialflussrichtung durch den Trockner geführt wird, um die Bildung von Schichtfehlern zu vermeiden.

Aus der JP H0531417 sind eine Kühlvorrichtung und ein entsprechendes Verfahren zum Kühlen von Gegenständen bekannt. Hierbei ist eine Kühlzone vorgesehen, die von Gegenständen durchlaufen wird. Am Eingang wird Luft abgesaugt, in einem Kühler mit externer Luft vermischt und gekühlt und der Kühlzone am Ausgang der Kühlzone wieder zugeführt.

Aus der DE 100 30 383 C1 sind ferner ein Verfahren und eine Vorrichtung zum nichtthermischen Trocknen von mit einem Wasserlack frisch lackierten Fahrzeugkarroserien bekannt. Die zu trocknenden Fahrzeugkarroserien werden in einem Trockentunnel mit trockener Luft zwangskonvektiv beaufschlagt. Vom bodenseitig abgesaugten Abluftstrom wird dabei ein Teil abgezweigt und über eine Lufttrocknungseinrichtung über eine Kältefalle getrocknet, auf die gewünschte Temperatur konditioniert und dann in den Trockentunnel von oben über ein Zuluftgebläse zugeführt. Der andere Teil der bodenseitig abgesaugten Luft wird dem Zuluftgebläse unbehandelt zugeführt.

Es ist daher eine Aufgabe der vorliegenden Erfindung eine verbesserte Kühlvorrichtung, ein verbessertes Kühlsystem und ein verbessertes Verfahren zum Kühlen von Gegenständen aus einer Beschichtungseinrichtung aufzuzeigen, die energetisch vorteilhaft sind und einen wirksamen Beitrag zur Reduzierung des Energiebedarfs beim Beschichten bieten können. Gemäß der Aufgabe soll auch eine energetisch vorteilhafte Beschichtungsanlage mit einem Trockner und einem Kühlsystem aufgezeigt werden.

Die Aufgabe wird gelöst durch eine Kühlvorrichtung gemäß Anspruch 1 und durch ein Verfahren gemäß Anspruch 13.

Der Fluidkreislauf dient dabei insbesondere der Beheizung von Teilen der Beschichtungsanlage, insbesondere von Vorbehandlungsbädern und/oder Zuluftanlagen.

Damit beschreitet die Erfindung einen ganz neuen Weg für die Abkühlung von lackierten Gegenständen, auf dem Gebiet der Oberflächenbeschichtungstechnik oft auch als Substrate bezeichnet. Während man im Zusammenhang mit Beschichtungsanlagen bisher davon ausgegangen ist, dass die Abkühlung der Luft in der Kühlzone am besten durch eine Luftabfuhr bzw. einen Luftaustausch zu bewerkstelligen ist, zeigt die Erfindung die Möglichkeit auf, die Luft im Wesentlichen innerhalb einer Umhausung zu halten und der Luft die Wärme innerhalb der Umhausung im Gegenstromprinzip zu entziehen. Dabei wird es insbesondere möglich, die Wärme in der Umhausung selbst abzugeben, so dass in diesem Teil bzw. Sektor keine Zuluft- und Abluftkanäle benötigt werden.

Bisher wurde davon ausgegangen, dass eine Wärmerückgewinnung nur im Zusammenhang mit viel höheren Temperaturen, wie sie z.B. beim Brennen von Keramik entstehen, sinnvoll einzusetzen ist, insbesondere zur Dampferzeugung mittels einer Turbine (siehe DE 43 28 301 C2), wohingegen eine Rückgewinnung bei den vergleichsweise geringen Temperaturen einer Beschichtungsanlage zu aufwändig sei. Die Erfindung zeigt nun aber eine Möglichkeit auf, die Abluft aus der Kühlvorrichtung zu reduzieren und die Kühlvorrichtung mit verbesserter Energieeffizienz zu betreiben.

Um dies zu erreichen, ist die Kühlvorrichtung derart ausgebildet, dass Luft aus der Kühlzone zu einem Wärmetauscher geführt wird. Da die Eintrittstemperatur der Luft vorzugsweise zwischen 40 °C und 250 °C liegt, können eine Vielzahl von bekannten Wärmetauschern verwendet werden. Während die Luft den Wärmetauscher durchströmt, gibt sie Wärme an den Fluidkreislauf ab und wird so abgekühlt. Die Luft wird dann der Kühlzone mit einer niedrigeren Austrittstemperatur wieder zugeführt. Das neue Konzept ist grundsätzlich auch bei Eintrittstemperaturen von mehr als 250 °C anwendbar.

Die dem Wärmetauscher zugeführte Luft aus der Kühlzone wird erfindungsgemäß aus einem vorderen Bereich der Kühlzone in der Umhausung abgezweigt und der Kühlzone nach Durchströmen des Wärmetauschers im Gegenstromprinzip wieder zugeführt.

Auf diese Weise ist eine effiziente Energienutzung gewährleistet.

Die vom Fluid im Fluidkreislauf aufgenommene Energie kann dann bevorzugt zum Heizen von Bädern für den Lackiervorgang verwendet werden, wobei dann die Vorlauftemperatur insbesondere 80 °C beträgt und/oder die Rücklauftemperatur bevorzugt 70 °C beträgt. Sind die Gegenstände bereits teilweise abgekühlt und geben weniger Energie ab, so kann das Fluid insbesondere zum Heizen von Zuluft verwendet werden, wobei dann die Vorlauftemperatur insbesondere 40 °C beträgt und/oder die Rücklauftemperatur bevorzugt 30 °C beträgt. Damit bleibt die Energie zum erheblichen Teil im System der Beschichtungsanlage erhalten, so dass eine verbesserte Gesamtenergieeffizienz erzielt wird.

Bei der Erfindung weist die Kühlvorrichtung ferner eine Kühlluftleiteinrichtung, die Luft zum Kühlen in die Kühlzone führt, und eine Warmlufteinrichtung auf, die durch die Gegenstände erwärmte Luft aus der Kühlzone führt, wobei der Wärmetauscher zwischen der Warmlufteinrichtung und der Kühllufteinrichtung angeordnet ist.

Bei der Erfindung lässt sich die Luftzirkulation innerhalb der Kühlzone und durch den Wärmetauscher gut festlegen. Dabei kann insbesondere bestimmt werden, an welcher Stelle der Kühlzone die Luft mit der Eintrittstemperatur entnommen wird und an welcher Stelle die Luft mit der Austrittstemperatur zurückgeführt wird.

Bei der Erfindung weist die Kühllufteinrichtung eine Mehrzahl von Düsen, insbesondere Luftdüsen, auf, die dafür ausgebildet sind, die gekühlte Luft entgegen der Transportrichtung in die Kühlzone einzublasen, wobei die Kühllufteinrichtung insbesondere als Kanalsystem ausgebildet ist.

Diese Ausgestaltung ermöglicht einerseits einen besonders guten Wärmetransfer zwischen den Gegenständen und der Luft in der Kühlzone. Andererseits kann auf diese Weise erreicht werden, dass die Luft im Wesentlichen innerhalb der Umhausung zirkuliert und nur zu einem unerheblichen Teil die Umhausung durch den Eingangsbereich und/oder Ausgangsbereich verlässt. Die gekühlte Luft wird insbesondere über das genannte Kanalsystem geführt.

Bei einer weiteren bevorzugten Ausgestaltung ist dem Wärmetauscher ein Ventilator, insbesondere ein Radialventilator, zugeordnet, der einen Luftstrom durch den Wärmetauscher erzeugt.

Diese Ausgestaltung ermöglicht es, die Luftzirkulation in der Umhausung zu steuern. Im Zusammenspiel mit dem Fluidkreislauf lassen sich so verschiedene Parameter, wie z.B. Austrittstemperatur oder Vorlauftemperatur variieren. Mittels eines Radialventilators kann eine besonders kompakte Bauweise erzielt werden.

Bei einer weiteren bevorzugten Ausgestaltung der Erfindung ist vor oder nach dem Wärmetauscher ein Filterelement angeordnet.

Mittels des Filterelements kann sichergestellt werden, dass der Wärmetauscher und auch die Gegenstände bzw. Substrate nicht oder nur in erheblich reduziertem Maße verschmutzen. Vorzugsweise handelt es sich um einen austauschbaren Filter, der insbesondere auch während des Betriebs gewechselt werden kann. Ferner ist es bevorzugt Filter der Filterklasse F7 zu verwenden.

Bei der Erfindung sind die Kühlluftleiteinrichtung und die Warmluftleiteinrichtung derart ausgebildet, dass die Luft in einem vorderen Bereich der Kühlzone entnommen wird und in einem mittleren und/oder hinteren Bereich der Kühlzone zugeführt wird.

Diese Ausgestaltung ist energetisch vorteilhaft, da die Luft im Bereich der Kühlzone mit der höchsten Temperatur, nämlich im vorderen Bereich, entnommen wird und in einem kühleren Abschnitt der Kühlzone, nämlich im mittleren und/oder hinteren Bereich wieder zugeführtwird. Die Begriffe "vorne" und "hinten" beziehen sich dabei auf die Transportrichtung, d.h., die Gegenstände treten vorne am Eingangsbereich in die Kühlzone ein und verlassen die Kühlzone hinten am Ausgangsbereich.

Bei einer weiteren bevorzugten Ausgestaltung der Erfindung weist die Transporteinrichtung eine Mehrzahl von Tragelementen auf, an denen die Gegenstände hängend oder liegend transportiert werden können.

Diese Ausgestaltung ist vorteilhaft, da die Tragelemente eine Vielzahl verschiedener Gegenstände transportieren können. Ferner kann so sichergestellt werden, dass der größte Teil der Oberfläche des Gegenstands mit der zirkulierenden Luft in der Kühlzone intensiv in Berührung kommt und so schnell abgekühlt wird.

Bei einer weiteren bevorzugten Ausgestaltung der Erfindung ist der Wärmetauscher innerhalb der Umhausung angeordnet, insbesondere oberhalb der Kühlzone.

Diese Ausgestaltung ist energetisch vorteilhaft, da die Luft in der Umhausung gehalten wird. Zudem ist die Umhausung dann bautechnisch einfacher zu realisieren. Bei Bedarf kann der Wärmetauscher auch als getrenntes Umluftgerät von der Kühlzone abgekoppelt ausgeführt sein.

Bei einer weiteren bevorzugten Ausgestaltung der Erfindung ist unterhalb des Wärmetauschers eine Auffangwanne für Flüssigkeit angeordnet.

Dies ermöglicht eine besonders einfache Reinigung des Wärmetauschers, da herunterlaufende oder -tropfende Reinigungsflüssigkeit von der Auffangwanne aufgefangen wird. Dadurch wird insbesondere eine Reinigung mittels eines Hochdruckreinigers leicht möglich, der eine schnelle Reinigung - sogar während des Betriebs - erlaubt.

Bei einer weiteren bevorzugten Ausgestaltung der Erfindung ist die Umhausung gegenüber der Atmosphäre außerhalb der Umhausung so abgeschlossen, dass im Wesentlichen keine Luft aus der Kühlzone in die Atmosphäre gelangt.

Diese Ausgestaltung stellt sicher, dass nur ein unerheblicher Anteil an Wärme die Kühlvorrichtung bzw. die Beschichtungsanlage verlässt. Vielmehr erreicht man auf diese Weise, dass der größte Teil der Energie die Beschichtungsanlage nicht verlässt und so weiter genutzt werden kann, bspw. um Bäder oder Zuluftanlagen zu heizen. Ferner ist es zur Verbesserung der Energiebilanz vorteilhaft, wenn die Kühlvorrichtung, insbesondere die Umhausung, teilweise oder vollständig isoliert ist, so dass keine oder nur eine geringe Wärmeabgabe erfolgt.

Bei einer weiteren Ausgestaltung der Erfindung ist die Temperatur der Gegenstände im Eingangsbereich kleiner als 300 °C, insbesondere kleiner als 200 °C, und ist im Ausgangsbereich kleiner als 150 °C, insbesondere kleiner als 120 °C.

Es hat sich herausgestellt, dass die Erfindung in diesen Temperaturbereichen besonders effizient ist.

Bei der Erfindung ist die Kühlvorrichtung dafür ausgebildet, die Gegenstände von einer Temperatur zwischen 300 °C und 100 °C auf eine Temperatur zwischen 150 °C und 40 °C abzukühlen.

Auch bei diesen Vorgaben lässt sich die Erfindung besonders effizient einsetzen, wobei sich - wie nachfolgend noch beschrieben wird - zur Erzielung dieser Temperaturabsenkung ein zweistufiges Kühlsystem besonders vorteilhaft ist.

Bei einer weiteren bevorzugten Ausgestaltung der Erfindung ist eine Fluidtemperatur im Fluidkreislauf kleiner als 150 °C, bevorzugt kleiner als 120 °C und insbesondere kleiner als 100 °C.

Bei dieser Fluidtemperatur kann der Fluidkreislauf, insbesondere wenn das Fluid dann noch unterhalb seiner Siedetemperatur ist, konstruktiv einfach ausgestaltet werden. Dies ist insbesondere dann der Fall, wenn es sich bei dem Fluid um Wasser handelt und die Fluidtemperatur kleiner als 100 °C ist.

Bei einer weiteren bevorzugten Ausgestaltung der Erfindung ist vor der Kühlvorrichtung, insbesondere vor der Kühlvorrichtung, die einem Trockner einer Beschichtungsanlage folgt, eine Vorkühlzone angeordnet.

Dies ermöglicht es auf einfache Weise Kondensat vom Trockner bzw. Einbrennofen, der Transporteinrichtung oder der Gegenstände bzw. Substrate abzuführen.

Gemäß einer weiteren Abwandlung der Erfindung wird aus der Vorkühlzone über ein Gebläse Luft abgezweigt und wieder in den vorgeschalteten Trockner im Gegenstromprinzip zurück geführt.

Diese Maßnahme hat den Vorteil, dass eine weiter verbesserte Energieausnutzung erfolgt, da die Wärmeenergie auf einem höheren Energieniveau (im Temperaturbereich des Trockners, z.B. bei etwa 200 °C) genutzt wird, was günstiger als die Nutzung in einer Kühlzone oder an einem Wärmetauscher ist. Auch wird einem Zusetzen des Wärmetauschers durch Rückstände entgegen gewirkt.

Bei einer vorteilhaften Ausgestaltung des Kühlsystems ist ein zweiter Wärmetauscher der zweiten Kühlvorrichtung an einen zweiten Fluidkreislauf angeschlossen, wobei eine zweite Fluidtemperatur in dem zweiten Fluidkreislauf kleiner als 70 °C, bevorzugt kleiner als 60 °C und insbesondere kleiner als 50 °C ist.

Diese Ausgestaltung ist besonders dafür geeignet, Wärme für das Aufheizen einer Zuluftanlage zu gewinnen.

Bei einer weiteren bevorzugten Ausgestaltung des Kühlsystems ist die zweite Kühlvorrichtung dafür ausgebildet, die Gegenstände von einer Temperatur zwischen 150 °C und 40 °C auf eine Temperatur zwischen 80 °C und 20 °C abzukühlen.

Im Zusammenspiel mit den bereits zuvor beschriebenen Eigenschaften der ersten Kühlvorrichtung lässt sich so eine zweistufige Kühlung realisieren, wobei die erste Kühlzone die Gegenstände von einer Maximaltemperatur auf eine Zwischentemperatur abkühlt und die zweite Kühlzone die Gegenstände von der Zwischentemperatur auf eine Zieltemperatur abkühlt. Dieser zweistufige Prozess ist energetisch vorteilhaft und ist konstruktiv einfacher zu realisieren. So können nun insbesondere statt großer Ventilatoren für die Zuluft und die Abluft, jeweils ein kleiner Ventilator in jeder der Kühlvorrichtungen eingesetzt werden. Insbesondere ist es dabei vorteilhaft, wenn die erste Kühlvorrichtung eine Abkühlung zwischen 50 K und 90 K, insbesondere zwischen 60 K und 80 K, erzielt und die zweite Kühlvorrichtung eine Abkühlung zwischen 20 K bis 60 K, insbesondere zwischen 30 K und 50 K, erzielt.

Schließlich liegt ein Vorteil der eingangs beschriebenen Beschichtungsanlage darin, dass durch die hohe Temperatur in der ersten Kühlzone die Frischluft in den Trockner vorgewärmt wird. Dies wird insbesondere dadurch erreicht, dass die Warmluftleiteinrichtung die Luft aus der Kühlzone an der Eingangsseite des Kühlsystems ansaugt, also dort wo die Temperatur am höchsten ist. Damit kann der Trockner dann Luft ansaugen, die 20 K bis 160 K über der Temperatur bei einem herkömmlichen Aufbau ist. Konkret bedeutet dies, dass ein Trockner bei einer erfindungsgemäßen Beschichtungsanlage die Luft mit ungefähr 100 °C ansaugen kann, während dies beim Stand der Technik lediglich 20 °C bis 60 °C sind. Werden Filter im Umluftkreislauf eingesetzt, wird dem Trockner bevorzugt filtrierte Luft zugeführt.

Bei einer bevorzugten Ausgestaltung der Beschichtungsanlage fällt die Ausgangsseite des Trockners mit einer Eingangsseite des Trockners zusammen.

Damit kann der Trockner als eine nach außen im Wesentlichen geschlossene Einheit ausgestaltet werden, so dass die Energieverluste reduziert und damit der Energieverbrauch gesenkt werden kann. Dabei sind Einsparungen von 30 % möglich.

Bei einer bevorzugten Ausgestaltung der Beschichtungsanlage ist die Transporteinrichtung derart ausgebildet, dass die Gegenstände durch eine Kühlvorrichtung in die Beschichtungsanlage eintreten.

Dabei ergibt sich, insbesondere im Zusammenspiel mit der zuvor genannten Ausgestaltung, eine weiter verbesserte Energieeffizienz, da zum einen die Energieverluste aus dem Trockner weiter verringert werden können und ein Energieaustausch zwischen den Gegenständen, die den Trockner verlassen, und den Gegenständen, die zum Trockner geführt werden, stattfinden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: eine Ausführungsform der Kühlvorrichtung gemäß der vorliegenden Erfindung;
- Fig. 2: ein erstes Ausführungsbeispiel einer Beschichtungsanlage mit einem Kühlsystem gemäß der vorliegenden Erfindung;
- Fig. 3: ein zweites Ausführungsbeispiel einer Beschichtungsanlage mit einem Kühlsystem gemäß der vorliegenden Erfindung; und
- Fig. 4: ein drittes Ausführungsbeispiel einer Beschichtungsanlage mit einem Kühlsystem gemäß der vorliegenden Erfindung.

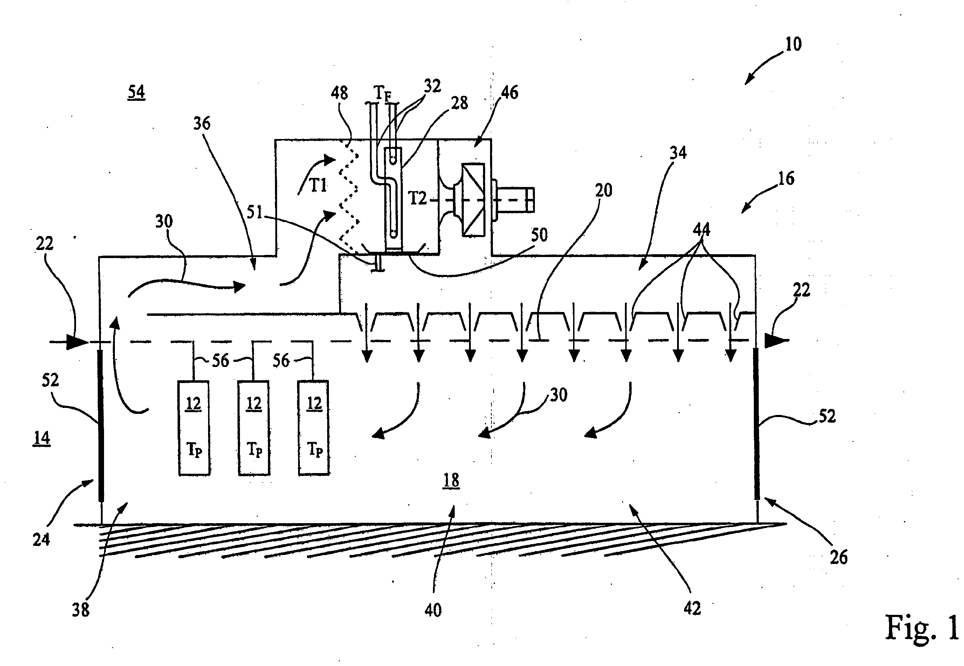

Fig. 1 zeigt eine Kühlvorrichtung 10 zum Kühlen von Gegenständen 12 aus einer - nicht näher dargestellten - Beschichtungseinrichtung 14. Die Kühlvorrichtung 10 hat eine isolierte Umhausung 16, die eine Kühlzone 18 aufweist. Ferner weist die Kühlvorrichtung 10 eine Transporteinrichtung 20 auf, die hier durch eine grob gestrichelte Linie symbolisch dargestellt ist. Die Transporteinrichtung 20 dient dem Transportieren der Gegenstände 12 entlang einer Transportrichtung 22, die hier symbolisch durch Pfeilspitzen dargestellt ist. Demnach werden die Gegenstände 12 von einem Eingangsbereich 24 durch die Kühlzone 18 zu einem Ausgangsbereich 26 transportiert und dabei abgekühlt. Oberhalb der Kühlzone 18 und innerhalb der Umhausung 16 ist ein Wärmetauscher 28 angeordnet, der dafür ausgebildet ist, Luft 30 - mittels der entsprechenden Pfeile symbolisch angedeutet - aus der Kühlzone 18 von einer Eintrittstemperatur T₁ unter Wärmeabgabe auf eine Austrittstemperatur T₂ abzukühlen. Der Wärmetauscher 28 ist an einen - lediglich angedeuteten - Fluidkreislauf 32 angeschlossen, an den die Wärmeabgabe erfolgt und wobei die Eintrittstemperatur T₁ der Luft 30 in den Wärmetauscher 28 zwischen 40 °C und 250 °C liegt.

Die Kühlvorrichtung 10 weist eine Kühlluftleiteinrichtung 34, die Luft 30 zum Kühlen in die Kühlzone 18 führt, und eine Warmluftleiteinrichtung 36 auf, die durch die Gegenstände 12 erwärmte Luft 30 aus der Kühlzone 18 führt, wobei der Wärmetauscher 28 zwischen der Warmluftleiteinrichtung 36 und der Kühlluftleiteinrichtung 34 angeordnet ist.

Die Kühlluftleiteinrichtung 34 und die Warmluftleiteinrichtung 36 sind so ausgebildet, dass die Luft 30 in einem vorderen Bereich 38 der Kühlzone 18 entnommen wird und einem mittleren und/oder hinteren Bereich 40, 42 der Kühlzone 18 zugeführt wird. Dabei weist die Kühlluftleiteinrichtung 34 eine Mehrzahl von (Luft-)Düsen 44 auf, die dafür ausgebildet sind, die gekühlte Luft 30 entgegen der Transportrichtung 22 in die Kühlzone 18 einzublasen, wobei die Kühlluftleiteinrichtung 34 insbesondere als Kanalsystem ausgebildet ist.

Dem Wärmetauscher 28 ist ein Ventilator 46 zugeordnet, der einen Luftstrom durch den Wärmetauscher 28 erzeugt. Der Ventilator 46 ist hier als Radialventilator ausgeführt. Vor dem Wärmetauscher 28 ist ein Filterelement 48 angeordnet, das mittels einer fein gestrichelten Linie angedeutet ist. Das Filterelement 48 verbessert die Luftqualität in der Kühlzone 18 und schützt den Wärmetauscher 28 vor Verschmutzungen.

Unterhalb des Wärmetauschers 28 ist eine Auffangwanne 50 für Flüssigkeit angeordnet, die eine Reinigungsflüssigkeit zum Reinigen des Wärmetauschers 28 aufnehmen und über eine Ableitung 51 abführen.

Mittels der Schleusenelemente 52 wird die Umhausung 16 so gegenüber der Atmosphäre 54 außerhalb der Umhausung 16 abgeschlossen, dass im Wesentlichen keine Luft 30 aus der Kühlzone 18 in die Atmosphäre 54 gelangt. Schließlich sei darauf hingewiesen, dass die Transporteinrichtung 20 eine Mehrzahl von Tragelementen 56 aufweist, an denen die Gegenstände 12 hängend oder auch liegend transportiert werden können.

Die Temperatur Tp der Gegenstände 12 im Eingangsbereich 24 ist hier kleiner als 200 °C und ist im Ausgangsbereich 26 kleiner als 120 °C. Die Fluidtemperatur T_{F} im Fluidkreislauf 32, genauer gesagt im Vorlauf des Fluidkreislaufs 32, ist kleiner als 100 °C. Als Fluid wird hier daher bevorzugt Wasser verwendet.

Das Kühlen der Gegenstände 12 findet dabei wie folgt statt. Die Gegenstände werden im Eingangsbereich 24 in die Kühlvorrichtung 10 gebracht und dann durch die Kühlzone 18 zum Ausgangsbereich 26 transportiert. Nach dem Ansaugen über die Warmluftleiteinrichtung 36 wird die Luft 30 aus der Kühlzone 18 abgekühlt, indem in der Luft 30 enthaltene Wärme mittels des Wärmetauschers 28 an den Fluidkreislauf 32 abgegeben wird. Die auf die Austrittstemperatur T₂ abgekühlte Luft 30 wird dann über die Kühlluftleiteinrichtung 34 wieder in die Kühlzone 18 geführt. Die mittels des Fluidkreislaufs 32 abgeführte Wärme wird an anderer Stelle zum Heizen verwendet, insbesondere von Bädern oder von Zuluftanlagen, so dass eine effiziente Energienutzung gegeben ist.

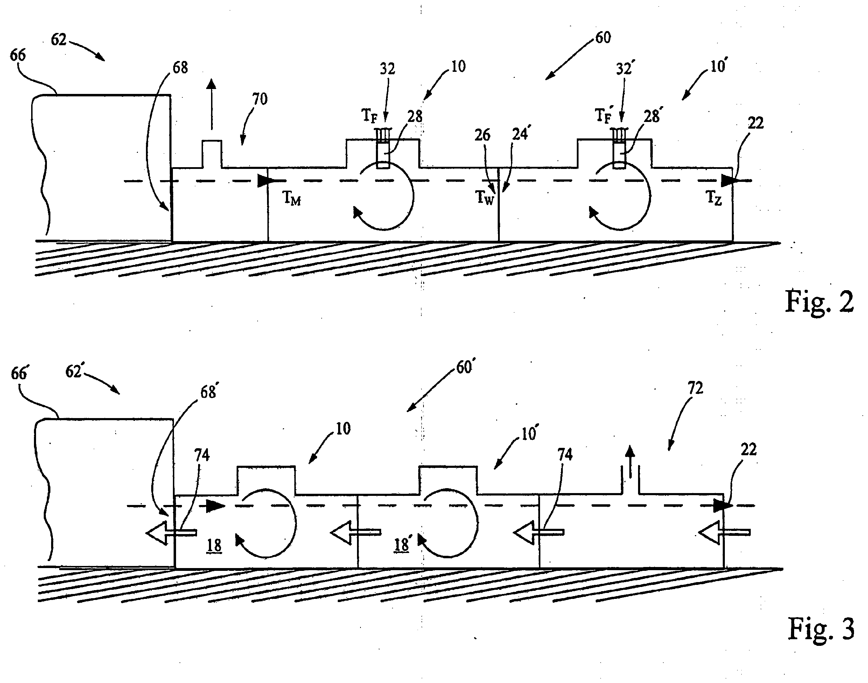

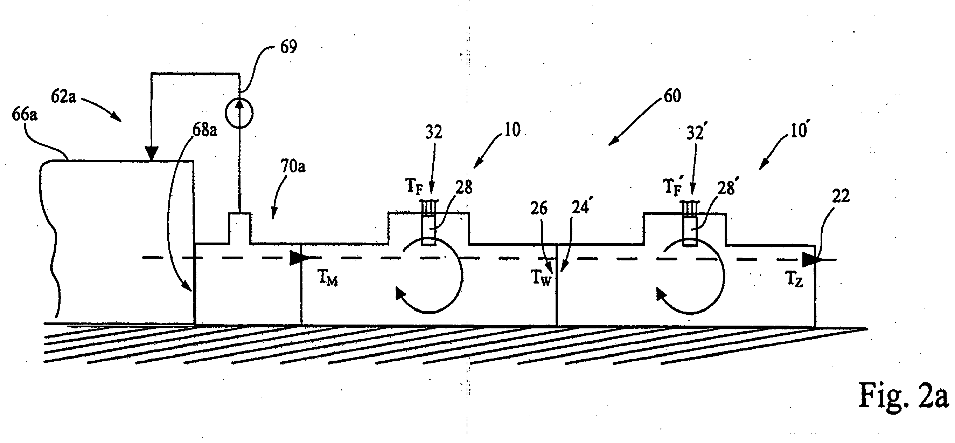

Die Leistungsfähigkeit der erfindungsgemäßen Kühlvorrichtung 10 kommt insbesondere dann zum Vorschein, wenn eine erste und eine zweite Kühlvorrichtung 10, 10' zu einem Kühlsystem 60 verbunden werden. Dabei ist der Ausgangsbereich 26 der ersten Kühlvorrichtung 10 mit dem Eingangsbereich 24' der zweiten Kühlvorrichtung 10' derart verbunden, dass die Gegenstände 12 nach Durchlaufen der ersten Kühlvorrichtung 10 in die zweite Kühlvorrichtung 10' gelangen. Um dies zu verdeutlichen, werden in den Figuren 2 und 3 zwei Ausgestaltungen von Beschichtungsanlagen 62, 62' gezeigt.

Die Beschichtungsanlage 62 gemäß der Fig. 2 weist einen Trockner 66 (auch Ofen genannt) auf, wobei die Ausgangsseite 68 des Trockners mit einer Vorkühlzone 70 verbunden ist, die wiederum mit dem genannten Kühlsystem 60 verbunden ist. In der Vorkühlzone 70 kann an den Gegenständen 12 anhaftendes Kondensat nach dem Verlassen des Trockners 66 abgeführt werden (durch den senkrechten Pfeil symbolisiert).

Nachdem die Gegenstände 12 die Vorkühlzone 70 durchlaufen haben, gelangen sie in die erste Kühlvorrichtung 10. Hier werden die Gegenstände von einer Maximaltemperatur T_{M} auf eine Zwischentemperatur Tw abgekühlt. Die Gegenstände 12 gelangen dann von der ersten Kühlvorrichtung 10 in die zweite Kühlvorrichtung 10'. Hier werden sie von der Zwischentemperatur Tw auf eine Zieltemperatur Tz abgekühlt. Damit realisiert das Kühlsystem 60 einen zweistufigen Kühlungsprozess.

Im Gegensatz zum Stand der Technik, wonach die abzukühlenden Gegenstände 12 mit maximalem technischen Aufwand so schnell wie möglich abgekühlt wurden, verfolgt das Kühlsystem 60 das Ziel, die Kühlung in einem zweistufigen Prozess durchzuführen, auch wenn sich dadurch die Gesamtverweilzeit im Kühlsystem 60 erhöht. Es hat sich nämlich gezeigt, dass der ausgedehnte Kühlprozess eine sehr gute Wärmeabgabe an den jeweiligen Fluidkreislauf 32, 32' ermöglicht, so dass die Energieersparnis die möglicherweise entstehenden Kosten für eine längere Verweilzeit der Gegenstände überwiegen. Für die hier gezeigte Beschichtungsanlage 62 werden T_{M} = 170 °C, Tw = 100 °C und Tz = 60 °C eingestellt.

In Fig. 2a ist eine Abwandlung der Ausführung gemäß Fig. 2 dargestellt. Dabei werden entsprechende Bezugsziffern für entsprechende Teile verwendet. Lediglich die abgewandelten Teile werden durch den Zusatz "a" gekennzeichnet. In Fig. 2a ist die Vorkühlzone 70a gegenüber der Ausführung gemäß Fig. 2 dadurch abgewandelt, dass nicht nur Kondensat abgeführt wird, sondern dass die Luft aus der Vorkühlzone 70a teilweise über ein Gebläse 69 wieder in den Trockner 66a der Beschichtungsanlage 62a im Gegenstromprinzip zurück geführt wird.

Diese Maßnahme hat den Vorteil, dass gegenüber der Ausführung gemäß Fig. 2 eine verbesserte Energieausnutzung erfolgt, da die Wärmeenergie auf einem höheren Energieniveau (im Temperaturbereich des Trockners, z.B. bei etwa 200 °C) genutzt wird, was günstiger als die Nutzung in einer Kühlzone oder an einem Wärmetauscher ist. Auch wird einem Zusetzen des Wärmetauschers 28 durch Rückstände entgegen gewirkt. Die Ausgangsseite 68a des Trockners 66a ist wie bei Fig. 2 mit dem Eingang der Vorkühlzone 70a verbunden.

In der Fig. 3 ist ein zweites Ausführungsbeispiel einer Beschichtungsanlage 62' dargestellt. Die Beschichtungsanlage 62' weist einen Trockner 66' auf, aus dem die Gegenstände 12 in das nachfolgende Kühlsystem 60' transportiert werden und schließlich in eine konventionelle Abluftkühlvorrichtung 72 gelangen. Eine Besonderheit der Beschichtungsanlage 62' liegt darin, dass eine Frischluftzufuhr 74, der anhand der großen Pfeile symbolisiert ist, gegen die Transportrichtung 22 in Richtung des Trockners 66' geführt wird. Dies bewirkt, dass eine von der ersten Kühlzone 18 erhitzte Frischluftzufuhr 74 in den Trockner 66' gelangt. Dadurch ergibt sich zum einen der Vorteil, dass eine besonders gute Kühlung in den Kühlzonen 18, 18' ermöglicht wird und dass zum anderen die Frischluftzufuhr 74 für den Trockner 66' eine deutlich höhere Temperatur hat, als sich dies bei einer herkömmlichen Frischluftzufuhr gemäß dem Stand der Technik erzielen lässt.

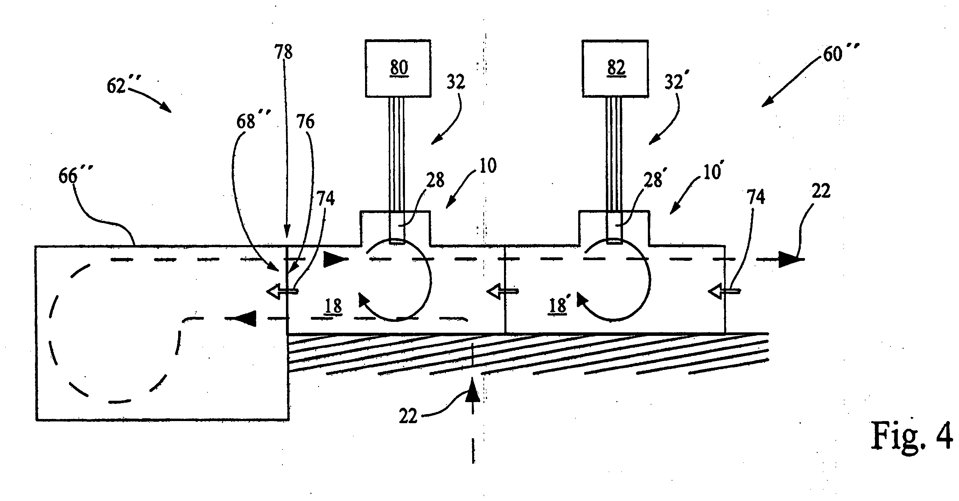

Fig. 4 zeigt schließlich ein drittes Ausführungsbeispiel einer Beschichtungsanlage 62". Bei dem Trockner 66" handelt es sich um eine nach außen im Wesentlichen geschlossene Einheit, bei der die Eingangsseite 68" und die Ausgangsseite 76 zusammenfallen. Das heißt, die Gegenstände treten an der Schnittstelle 78 zwischen der ersten Kühlvorrichtung 10 und dem Trockner 66" in den Trockner 66" ein und verlassen den Trockner 66" auch wieder an dieser Schnittstelle 78.

Ferner ist gezeigt, dass die Gegenstände 12 durch die erste Kühlzone 10 in die Beschichtungsanlage 62" eingebracht werden. Die Gegenstände 12 können auch durch die zweite Kühlzone 10' in die Beschichtungsanlage 62" eingebracht werden. Die dafür benötigte Transporteinrichtung 20" kann dafür auf viele verschiedene Weises ausgestaltet sein.

Diese Ausgestaltung hat zwei wesentliche Vorteile. Zum einen findet in der ersten Kühlzone 10 ein Wärmeaustausch zwischen Gegenständen 12 statt, die zum Trockner 66" transportiert werden, und Gegenständen 12, die vom Trockner 66" kommen, weil die Gegenstände 12 durch dieselbe Kühlzone 18 geführt werden, insbesondere aneinander vorbei geführt werden. Dies verbessert die Kühlung der heißen Gegenstände 12 und wärmt die kalten Gegenstände 12 vor.

Zum anderen kann der Trockner 66" seine Luft nun aus der Kühlzone 10 bekommen. Insbesondere werden alle Frischluftansaugestellen des Trockners 66" mit warmer Luft versorgt. Diese Ausgestaltung kann zu erheblichen Energieeinsparungen führen, insbesondere in der Größenordnung von 30 % der Trocknerenergie. Wie in der Figur gezeigt ist, kann auch hier eine Frischluftzufuhr 74 durch die Kühlvorrichtungen 10, 10' erfolgen, wobei die Frischluftzufuhr 74 aber kleiner gewählt werden kann als bei den vorherigen Ausführungsbeispielen.

Schließlich ist bei dieser Ausführungsform explizit gezeigt, dass die der ersten Kühlzone entnommene Wärme einer Heizung 80 für (Vorbehandlungs-)Bäder zugeführt wird und dass die der zweiten Kühlzone entnommene Wärme einer Heizung 82 für Zuluftanlagen zugeführt wird. Diese Wärmenutzung lässt sich auch bei den anderen Beschichtungsanlagen 62, 62' realisieren.

Insgesamt ist festzustellen, dass die Erfindung eine kostengünstige Möglichkeit für eine Wärmerückgewinnung im Zusammenhang mit einer Beschichtungsanlage 62, 62', 62" aufzeigt, wohingegen der Stand der Technik eine Wärmerückgewinnung bei Beschichtungsanlagen als aufwändig und unrentabel angesehen hatte. Die Erfindung nimmt auch Abstand davon, eine maximal mögliche Kühlung in kürzestmöglicher Zeit zu erzielen, da im Rahmen der Erfindung festgestellt wurde, dass sich bei einer Ausdehnung der Kühlungsprozesses eine bessere Wärmerückgewinnung erzielen lässt.

Ferner bietet das zweistufige Konzept die Möglichkeit, auf einfache Weise Wärme in zwei verschiedenen Temperaturbereichen zu gewinnen und so die verschiedenen Heizanforderungen einer Beschichtungsanlage, insbesondere die genannten Bäder und Heizungen für Zuluft, zu berücksichtigen. Dadurch ergibt sich insgesamt ein energetisch effizientes System, was bereits jetzt rentabler arbeitet als herkömmliche Systeme. Dieser Vorteil wird sich mit steigenden Energiepreisen noch drastisch vergrößern.

## Patentansprüche

1. Kühlvorrichtung (10, 10') zum Kühlen von Gegenständen (12) aus einer Beschichtungseinrichtung (14), mit einer Umhausung (16), die eine Kühlzone (18) aufweist, mit einer Transporteinrichtung (20), die zum Transportieren der Gegenstände (12) entlang einer Transportrichtung (22) von einem Eingangsbereich (24) durch die Kühlzone (18) zu einem Ausgangsbereich (26) ausgebildet ist, **dadurch gekennzeichnet, dass** ein Wärmetauscher (28) vorgesehen ist, dem Luft (30) aus der Kühlzone (18) zugeführt ist, die im Wärmetauscher (28) durch einen an den Wärmetauscher (28) angeschlossenen Fluidkreislauf (32) abgekühlt wird, dass dem Wärmetauscher (28) aus einem vorderen Bereich (38) der Kühlzone (18) innerhalb der Umhausung (16) abgezweigte Luft zugeführt wird, die nach Durchströmen des Wärmetauschers (28) der Kühlzone (18) im Gegenstromprinzip wieder zugeführt wird, dass die im Wärmetauscher (28) abgekühlte Luft der Kühlzone (18) über eine Kühlluftleiteinrichtung (34) zum Kühlen zugeführt ist, und dass die aus der Kühlzone (18) abgezweigte Luft dem Wärmetauscher (28) über eine Warmluftleiteinrichtung (36) zugeführt ist, dass die Kühlvorrichtung (10) dafür ausgebildet ist, die Gegenstände (12) von einer Temperatur (T_{P}) zwischen 300°C und 100°C auf eine Temperatur (T_{P}) zwischen 150°C und 40°C abzukühlen, und dass die Kühlluftleiteinrichtung (34) eine Mehrzahl von Düsen (44) aufweist, die dafür ausgebildet sind, die gekühlte Luft (30) entgegen der Transportrichtung (22) in die Kühlzone (18) einzublasen.

2. Kühlvorrichtung nach Anspruch 1, **dadurch gekennzeichnet, dass** die dem Wärmetauscher (28) zugeführte Luft (30) aus der Kühlzone (18) eine Eintrittstemperatur (T₁) zwischen 40°C und 250°C aufweist.

3. Kühlvorrichtung nach Anspruch 1 oder 2, **dadurch gekennzeichnet, dass** die Kühlluftleiteinrichtung (34) als Kanalsystem ausgebildet ist.

4. Kühlvorrichtung nach einem der vorhergehenden Ansprüche, **dadurch gekennzeichnet, dass** dem Wärmetauscher (28) ein Ventilator (46), insbesondere ein Radialventilator, zugeordnet ist, der einen Luftstrom durch den Wärmetauscher (28) erzeugt.

5. Kühlvorrichtung nach einem der vorhergehenden Ansprüche, wobei der Wärmetauscher (28) innerhalb der Umhausung (16) angeordnet ist, vorzugsweise oberhalb der Kühlzone (18).

6. Kühlvorrichtung nach einem der vorhergehenden Ansprüche, wobei die Umhausung (16) gegenüber der Atmosphäre (54) außerhalb der Umhausung (16) so abgeschlossen ist, dass im Wesentlichen keine Luft (30) aus der Kühlzone (18) in die Atmosphäre (54) gelangt.

7. Kühlvorrichtung nach einem der vorhergehenden Ansprüche, wobei die Kühlvorrichtung dazu ausgebildet ist, dass die Temperatur (T_{P}) der Gegenstände (12) im Eingangsbereich (24) kleiner als 300°C, insbesondere kleiner als 200°C, ist und im Ausgangsbereich (26) kleiner als 150°C, insbesondere kleiner als 120°C, ist.

8. Kühlvorrichtung nach einem der vorhergehenden Ansprüche, **dadurch gekennzeichnet, dass** die Fluidtemperatur (T_{F}) im Fluidkreislauf (32) kleiner als 120°C und bevorzugt kleiner als 100°C ist.

9. Kühlsystem mit einer Kühlvorrichtung nach einem der vorhergehenden Ansprüche, wobei in Transportrichtung (22) gesehen vor der Kühlvorrichtung (10) eine Vorkühlzone (70) angeordnet ist.

10. Kühlsystem nach Anspruch 9, bei der aus der Vorkühlzone (70) Luft entnommen und einem vorgeordneten Trockner (66) entgegen der Transportrichtung (22) zugeführt wird.

11. Kühlsystem mit einer Kühlvorrichtung nach einem der vorhergehenden Ansprüche, wobei in Transportrichtung (22) gesehen nach der Kühlvorrichtung (10') eine Abluftkühlvorrichtung (72) angeordnet ist.

12. Kühlsystem (60, 60') mit einer ersten und einer zweiten Kühlvorrichtung (10, 10'), die jeweils nach einem der vorhergehenden Ansprüche ausgebildet sind, wobei der Ausgangsbereich (26) der ersten Kühlvorrichtung (10) mit dem Eingangsbereich (24') der zweiten Kühlvorrichtung (10') derart verbunden ist, dass die Gegenstände (12) nach Durchlaufen der ersten Kühlvorrichtung (10) in die zweite Kühlvorrichtung (10') gelangen.

13. Verfahren zum Kühlen von Gegenständen (12) aus einer Beschichtungseinrichtung (14), mit den folgenden Schritten:
- Transportieren der Gegenstände (12) durch eine von einer Umhausung (16) umschlossene Kühlzone (18),
- während des Transportierens, Abkühlen von Luft (30) aus der Kühlzone (18), indem Luft aus dem vorderen Bereich der Kühlzone (18) innerhalb der Umhausung (16) abgezweigt, durch einen Wärmetauscher (28) abgekühlt und der Kühlzone (18) im Gegenstromprinzip wieder zugeführt wird,
- wobei die im Wärmetauscher (28) abgekühlte Luft der Kühlzone (18) über eine Kühlluftleiteinrichtung (34) zum Kühlen zugeführt wird,
- wobei die aus der Kühlzone (18) abgezweigte Luft dem Wärmetauscher (28) über eine Warmluftleiteinrichtung (36) zugeführt wird,
- wobei die Gegenstände (12) von einer Temperatur (T_{P}) zwischen 300°C und 100°C auf eine Temperatur (T_{P}) zwischen 150°C und 40°C abgekühlt werden,
- und wobei die gekühlte Luft (30) über eine Mehrzahl von Düsen (44) der Kühlluftleiteinrichtung (34) entgegen der Transportrichtung (22) in die Kühlluftzone (18) eingeblasen wird.

## Claims

1. A cooling apparatus (10, 10') for cooling objects (12) from a coating device (14), with a housing (16) which has a cooling zone (18), with a transport device (20) which is designed for transporting the objects (12) along a transport direction (22) from an entrance region (24) through the cooling zone (18) to an exit region (26), **characterized in that** a heat exchanger (28) is provided, to which cooling air (30) from the cooling zone (18) is fed which in the heat exchanger (28) is cooled by means of a fluid circuit (32) connected to the heat exchanger (28), **in that** air branched off from a front region (38) of the cooling zone (18) is supplied to the heat exchanger (28) and, after flowing through the heat exchanger (28), is supplied to the cooling zone (18) again on the countercurrent principle, **in that** the air cooled in the heat exchanger (28) is supplied for cooling to the cooling zone (18) via a cool-air conducting device (34), and in which the air branched off from the cooling zone (18) is supplied to the heat exchanger (28) via a warm-air conducting device (36), **in that** the heat exchanger (28) is configured for cooling objects from a temperature (T_{P}) of between 300°C and 100°C to a temperature (T_{P}) of between 150°C and 40°C, and **in that** the cool-air conducting device (34) comprises a plurality of nozzles (44) which are designed for injecting the cooled air (30) opposite to the transport direction (22) into the cooling zone (18).

2. The cooling apparatus of claim 1, **characterized in that** the air (30) supplied to the heat exchanger (28) from the cooling zone (18) has an inlet temperature (T₁) of between 40°C and 250°C.

3. The cooling apparatus of any of claims 1 or 2, **characterized in that** the cool-air conducting device (34) is designed as a duct system.

4. The cooling apparatus of any of the preceding claims, **characterized in that** a fan (46), in particular a radial fan, is assigned to the heat exchanger (28) generating an air stream through the heat exchanger (28).

5. The cooling apparatus of any of the preceding claims, **characterized in that** the heat exchanger (28) is arranged within the housing (16), preferably above the cooling zone (18).

6. The cooling apparatus of any of the preceding claims, wherein the housing (16) is closed off with respect to the atmosphere (54) outside the housing (16) so that essentially no air (30) passes from the cooling zone (18) into the atmosphere (54).

7. The cooling apparatus of any of the preceding claims, wherein the temperature (T_{P}) of the objects (12) in the entrance region (24) being lower than 300°C, in particular lower than 200°C, and in the exit region (26) being lower than 150°C, in particular lower than 120°C.

8. The cooling apparatus of any of the preceding claims, **characterized in that** the cooling apparatus (10) is designed for cooling the objects (12) and **in that** a fluid temperature (T_{F}) in the fluid circuit (32) is preferably lower than 150°C, further preferred lower than 120°C and, in particular, lower than 100°C.

9. The cooling apparatus of any of the preceding claims, wherein a precooling zone (70) is arranged upstream of the cooling apparatus (10), as seen in the transport direction (22).

10. The cooling apparatus of claim 9, **characterized in that** air is extracted from the precooling zone (70) and is supplied to a preceding drier (66) opposite to the transport direction (22).

11. The cooling apparatus of any of the preceding claims, wherein an exhaust-air cooling apparatus (72) being arranged downstream of the cooling apparatus (10'), as seen in the transport direction (22).

12. A cooling system (60, 60') with a first and a second cooling apparatus (10, 10') which are designed in each case according to one of the preceding claims, wherein the exit region (26) of a first cooling apparatus (10) being connected to the entrance region (24') of the second cooling apparatus (10') in such a way that the objects (12), after running through the first cooling apparatus (10), pass into the second cooling apparatus (10').

13. A method for cooling objects (12) from a coating device (14), comprising the following steps:
- transportating the objects (12) through a cooling zone (18) being enclosed by a housing,
- during transportation, cooling of air (30) from the cooling zone (18) in that air is branched off from the cooling zone (18), cooled by a heat exchanger (28) and supplied to the cooling zone (18) again on the countercurrent principle,
- the air cooled in the heat exchanger (28) is supplied for cooling to the cooling zone (18) via a cool air conducting device (34),
- wherein the air branched off from the cooling zone (18) is supplied to the heat exchanger (28) via a warm air conducting device (36),
- wherein the objects are cooled from a temperature (T_{P}) of between 300°C and 100°C to a temperature (T_{P}) of between 150°C and 40°C,
- and wherein the cooled air (30) is blown into the cooling zone (18) opposite to the transport direction (22) via a plurality of nozzles (44).

## Revendications

1. Dispositif de refroidissement (10, 10') destiné à refroidir des objets (12) provenant d'un moyen de revêtement (14), ledit dispositif comprenant une enceinte (16) qui comporte une zone de refroidissement (18), un moyen de transport (20) qui sert à transporter les objets (12) le long d'une direction de transport (22) depuis une région d'entrée (24) à une région de sortie (26) via la région de refroidissement (18), **caractérisé en ce qu'**un échangeur de chaleur (28) est prévu auquel est amené de l'air (30) qui provient de la zone de refroidissement (18) et qui est refroidi dans l'échangeur de chaleur (28) par un circuit de fluide (32) raccordé à l'échangeur de chaleur (28), **en ce que** de l'air dévié d'une région avant (38) de la zone de refroidissement (18) à l'intérieur de l'enceinte (16) est amené à l'échangeur de chaleur (28), lequel air est ramené à contre-courant à la zone de refroidissement (18) après avoir traversé l'échangeur de chaleur (28), **en ce que** l'air refroidi dans l'échangeur de chaleur (28) est amené à la zone de refroidissement (18) via un moyen de conduite d'air de refroidissement (34) afin d'effectuer le refroidissement, et **en ce que** l'air dévié de la zone de refroidissement (18) est amené à l'échangeur de chaleur (28) via un moyen de conduite d'air chaud (36), **en ce que** le dispositif de refroidissement (10) est conçu pour refroidir les objets (12) d'une température (T_{P}) comprise entre 300 °C et 100 °C à une température (T_{P}) comprise entre 150 °C et 40 °C, et **en ce que** le moyen de conduite d'air de refroidissement (34) comporte une pluralité de buses (44) qui sont conçues pour souffler l'air refroidi (30) dans la zone de refroidissement (18) dans le sens inverse du sens de transport (22).

2. Dispositif de refroidissement selon la revendication 1, **caractérisé en ce que** l'air (30) amené à l'échangeur de chaleur (28) et provenant de la zone de refroidissement (18) a une température d'entrée (T₁) comprise entre 40 °C et 250 °C.

3. Dispositif de refroidissement selon la revendication 1 ou 2, **caractérisé en ce que** le moyen de conduite d'air de refroidissement (34) est réalisé sous la forme d'un système de canaux.

4. Dispositif de refroidissement selon l'une des revendications précédentes, **caractérisé en ce qu'**un ventilateur (46), notamment un ventilateur radial, est associé à l'échangeur de chaleur (28) et génère un flux d'air à travers l'échangeur de chaleur (28).

5. Dispositif de refroidissement selon l'une des revendications précédentes, l'échangeur de chaleur (28) étant disposé à l'intérieur de l'enceinte (16), de préférence au-dessus de la zone de refroidissement (18).

6. Dispositif de refroidissement selon l'une des revendications précédentes, l'enceinte (16) étant isolée de l'atmosphère (54) à l'extérieur de l'enceinte (16) de telle sorte qu'essentiellement aucun air (30) provenant de la zone de refroidissement (18) ne parvient dans l'atmosphère (54).

7. Dispositif de refroidissement selon l'une des revendications précédentes, le dispositif de refroidissement étant conçu pour que la température (T_{P}) des objets (12) dans la zone d'entrée (24) soit inférieure à 300 °C, notamment inférieure à 200 °C, et dans la zone de sortie (26) soit inférieure à 150 °C, notamment inférieure à 120 °C.

8. Dispositif de refroidissement selon l'une des revendications précédentes, **caractérisé en ce que** la température de fluide (T_{F}) dans le circuit de fluide (32) est inférieure à 120 °C et de préférence inférieure à 100 °C.

9. Système de refroidissement comprenant un dispositif de refroidissement selon l'une des revendications précédentes, une zone de pré-refroidissement (70) étant disposée en amont du dispositif de refroidissement (10) dans le sens de transport (22).

10. Système de refroidissement selon la revendication 9, dans lequel de l'air est prélevé dans la zone de pré-refroidissement (70) et amené à un sécheur amont (66) dans le sens inverse du sens de transport (22).

11. Système de refroidissement comprenant un dispositif de refroidissement selon l'une des revendications précédentes, un dispositif de refroidissement d'air d'échappement (72) étant disposé en aval du dispositif de refroidissement (10') dans le sens de transport (22).

12. Système de refroidissement (60, 60') comprenant un premier et un deuxième dispositif de refroidissement (10, 10') qui sont chacun conçus selon l'une des revendications précédentes, la région de sortie (26) du premier dispositif de refroidissement (10) étant reliée à la région d'entrée (24') du deuxième dispositif de refroidissement (10') de telle sorte que les objets (12) arrivent dans le deuxième dispositif de refroidissement (10') après avoir traversé le premier dispositif de refroidissement (10).

13. Procédé de refroidissement d'objets (12) provenant d'un moyen de revêtement (14), ledit procédé comprenant les étapes suivantes :
- transporter les objets (12) à travers une zone de refroidissement (18) fermée par une enceinte (16),
- pendant le transport, refroidir l'air (30) provenant de la zone de refroidissement (18), par le fait que de l'air est dérivé de la région avant de la zone de refroidissement (18) à l'intérieur de l'enceinte (16), refroidi par un échangeur de chaleur (28) et ramené à contre-courant à la zone de refroidissement (18),
- l'air refroidi dans l'échangeur de chaleur (28) étant amené à la zone de refroidissement (18) via un moyen de conduite d'air de refroidissement (34) pour effectuer le refroidissement,
- l'air dérivé de la zone de refroidissement (18) étant amené à l'échangeur de chaleur (28) via un moyen de conduite d'air chaud (36),
- les objets (12) étant refroidis d'une température (T_{P}) comprise entre 300 °C et 100 °C à une température (T_{P}) comprise entre 150 °C et 40 °C,
- et l'air refroidi (30) étant soufflé dans la zone d'air de refroidissement (18) dans le sens inverse du sens de transport (22) par une pluralité de buses (44) du moyen de conduite d'air de refroidissement (34).
